# EUROPÄISCHE PATENTSCHRIFT

(11) **EP 2 701 872 B1**
(45) Veröffentlichungstag und Bekanntmachung des Hinweises auf die Patenterteilung: **16.09.2015**
(21) Anmeldenummer: 12728363.8
(22) Anmeldetag: 26.04.2012
(51) Int. Cl.: B23K 9/02, B23K 9/00, B23K 26/08

(54) **VERFAHREN ZUM STUMPFSCHWEISSEN ZWEIER BÄNDER ENTLANG IHRER LÄNGSKANTEN**
METHOD FOR BUTT-WELDING TWO STRIPS ALONG THE LONGITUDINAL EDGES THEREOF
PROCÉDÉ POUR SOUDER BOUT À BOUT DEUX BANDES LE LONG DE LEURS ARÊTES LONGITUDINALES

(30) Priorität: 27.04.2011 AT 5902011
(43) Veröffentlichungstag der Anmeldung: 05.03.2014
(73) Patentinhaber: Berndorf Band GmbH, 2560 Berndorf (AT)
(72) Erfinder: HARREITHER, Rupert, A-8600 Oberaich (AT); SCHUSTER, Roland, A-2560 Berndorf (AT)
(74) Vertreter: Burger, Hannes
(86) Internationale Anmeldenummer: PCT/AT2012/050055
(87) Internationale Veröffentlichungsnummer: WO 2012/145779

(56) Entgegenhaltungen:
- EP-A1- 0 438 612
- DE-C1- 4 022 062
- US-A- 5 187 346
- US-A1- 2006 151 291

## Beschreibung

Die Erfindung betrifft ein Verfahren zur Verfahren zur Herstellung eines Bandes, welches durch längsseitiges Verschweißen zumindest zweier einzelner Bänder hergestellt wird.

Darüber hinaus betrifft die Erfindung eine Vorrichtung zur Herstellung eines aus zumindest zwei einzelnen Bändern längsverschweißten Bandes mittels eines Schweißgerätes und zumindest einem Antriebsmittel zum Bewegen der Bänder.

Bei der Herstellung von Filmen, insbesondere Triacetatfilmen, welche beispielsweise für die Produktion von LCD-Bildschirmen verwendet werden, kommen Endlosbänder zum Einsatz, auf die derartige Filme aufgetragen werden. Die Herstellung größerer Bildschirme, macht auch die Verwendung breiterer Endlosbänder erforderlich. Auch hinsichtlich der Produktivitätserhöhung bei der Herstellung von Filmmaterial ist es von Vorteil, breitere Bänder zu verwenden. Da die Bandbreiten der für die Herstellung von Endlosbändern verwendeten Rohbänder üblicherweise bei ca. 2 m liegen, werden zur Erzielung größerer Bandbreiten zwei oder mehrere Rohbänder an ihren längsseitigen Kanten miteinander verschweißt. Dieses Längsverschweißen erfolgt üblicherweise in einer horizontalen Ebene. Hierzu werden gemäß dem Stand der Technik die zu Rollen gewickelten Rohbänder neben einander abgewickelt und in Bandlängsrichtung entlang ihrer Längskanten miteinander verschweißt. Die Schweißnaht wird hierbei in horizontaler Richtung geführt. Ein derartiges Verfahren bzw. ein derartiges Band ist beispielsweise aus US 3728066 oder aus DE 4022062 C1 bekannt geworden. Nachteilig an den bekannten Verfahren ist jedoch, dass sich aufgrund der horizontalen Orientierung der Bänder bzw. der Schweißnahtführung während des Verschweißens eine schwerkraftbedingte Asymmetrie in der resultierende Schweißnaht ergibt. Dies ist vor allem deshalb problematisch, da die Oberfläche des längsverschweißten Band für die Filmherstellung möglichst homogen ausgebildet sein muss und keine Unregelmäßigkeiten aufweisen soll. Bei einer asymmetrischen Schweißnaht kann es jedoch in nachfolgenden Bearbeitungsschritten, wie beispielsweise Schleifen aufgrund eines ungleichmäßigen Materialabtrages zu Inhomogenitäten in der Oberfläche des Bandes kommen.

Es ist daher eine Aufgabe der Erfindung, die Herstellung breiter Bänder aus einzelnen Bändern mit optimalen Oberflächeneigenschaften zu ermöglichen.

Diese Aufgabe wird mit einem Verfahren der eingangs genannten Art erfindungsgemäß dadurch gelöst, dass Abschnitte der einzelnen Bänder vor dem Verschweißen in eine vertikale Richtung umgelenkt werden, wobei die umgelenkten Abschnitte der Bänder in vertikaler Richtung an einem Schweißkopf zumindest eines Schweißgerätes vorbeigeführt und von diesem miteinander verschweißt werden.

An dieser Stelle sei angemerkt, dass in diesem Dokument unter dem Begriff vertikal eine im Wesentlichen rechtwinklig zur Erdoberfläche bzw. auf den Erdmittelpunkt gerichtete Richtung verstanden wird. Somit wird der Begriff vertikal in dem vorliegenden Zusammenhang im Sinne von im "Wesentlichen lotrecht" gebraucht. Es sei jedoch darauf hingewiesen, dass geringfügige Abweichungen von der Lotrechten, die ohne Einfluss auf die erfindungsgemäße Lösung sind, hier natürlich ebenfalls unter dem Begriff "vertikal" subsummiert werden.

Durch die vertikale Anordnung der Schweißnaht, kann sich während des Schweißvorganges entstehende Schmelze aufgrund der Schwerkraft gleichmäßig verteilen und so eine symmetrische Schweißnaht erhalten werden. Aufgrund der Symmetrie der Schweißnaht ist auch ein gleichmäßiger Materialabtrag während eines nachfolgenden Schleifvorganges gewährleistet. Dadurch wird neben einer Vereinfachung der Bearbeitung auch die Oberflächenqualität eines aus dem längsverschweißten Band hergestellten Endlosbandes wesentlich verbessert.

Eine vorteilhafte Variante der Erfindung sieht vor, dass die einander zugewandten und miteinander zu verschweißender Kanten der in vertikaler Richtung umgelenkten Abschnitte der Bänder mittels Drehteller aufeinander zugetrieben werden, wobei jedem Band zumindest ein Drehteller zugeordnet ist, der in Richtung des anderen Bandes geneigt ist. Auf diese Weise lässt sich ein zwischen den miteinander zu verschweißenden Bändern vorhandener Spalt im Bereich der Schweißstelle verringern und somit der Schweißprozess günstig beeinflussen. Hierbei hat es sich als besonders vorteilhaft erwiesen, wenn jeder Drehteller nur in einem der zu verschweißenden Längskante benachbarten Bereich an der Oberfläche des ihm zugeordneten Bandes anliegt.

Gemäß einer besonders vorteilhaften Variante der Erfindung kann es vorgesehen sein, dass die miteinander zu verschweißenden einzelnen Bänder vor dem Umlenken in vertikaler Richtung aus einander entgegengesetzten Förderrichtungen aufeinander zugeführt werden. Diese Ausführungsform der Erfindung gewährleistet einen optimalen Bandverlauf der beiden einzelnen Bänder. Durch diese Anordnung lassen sich auch gegenseitige durch Bewegungen der Bänder hervorgerufene Störungen während eines horizontalen Förderns zur Schweißstelle ausschließen, wie sie bei einer parallelen Anordnung der Bänder während des Förderns zur Schweißstelle bzw. zu einer vor der Schweißstelle angeordneten Umlenkung in vertikaler Richtung auftreten können.

Die oben genannte Aufgabe lässt sich auch mit einer Vorrichtung gemäß Anspruch 5 lösen.

Eine vorteilhafte Weiterbildung der erfindungsgemäßen Vorrichtung sieht vor, dass die Förderrichtungen der mit einander zu verschweißenden einzelnen Bänder vor dem Passieren der zumindest einen Umlenkung einander entgegengesetzt sind.

Eine bevorzugte Variante der Erfindung sieht vor, dass die Vorrichtung zwischen der zumindest einen Umlenkung und dem Schweißkopf des Schweißgerätes zumindest zwei Drehteller aufweist, welche zu den Oberflächen einzelnen Bänder in Richtung der miteinander zu verschweißenden Längskanten dieser Bänder geneigt angeordnet sind. Besonders günstig ist es hierbei, wenn die Drehteller um ihre Drehachsen frei drehbar angeordnet sind.

Eine besonders günstige Weiterbildung der Erfindung besteht darin, dass das Schweißgerät ein Laserschweißgerät ist. Wenngleich die erfindungsgemäße Lösung nicht auf die Verwendung eines Laserschweißgerätes beschränkt ist, sondern auch andere Schweißverfahren, wie beispielsweise WIG Schweißen, MIG/MAG Schweißen, Ultraschall- oder Reibrührschweißen, zum Einsatz kommen können, so ist mit der Verwendung eines Laserschweißgerätes jedoch der Vorteil einer schmalen und schlanken Schweißnahtform verbunden. Dies ist in dem vorliegenden Zusammenhang als besonders vorteilhaft anzusehen.

Ein nach dem erfindungsgemäßen Verfahren bzw. mit der erfindungsgemäßen Vorrichtung hergestelltes Band bietet den Vorteil einer großen Breite und einer symmetrischen Schweißnaht. Ein derartiges Band lässt sich besonders gut zu einem hochglanzpolierten Endlosband mit einer hochhomogenen Struktur und Oberflächenbeschaffenheit weiterverarbeiten.

Die Erfindung samt weiteren Vorteilen wird im Folgenden anhand einiger nicht einschränkender Ausführungsbeispiele, welche in den Figuren dargestellt sind, näher erläutert.

Es zeigen jeweils in stark schematisch vereinfachter Darstellung:
- Fig. 1: eine Seitenansicht einer erfindungsgemäßen Vorrichtung;
- Fig. 2: eine Ansicht eines Schweißbereichs aus Richtung V in Fig. 1, wobei eine Halterung für Drehteller nicht dargestellt ist;
- Fig. 3: einen in einem vertikalen Bandverlaufsbereich angeordneten mit einem Band zusammenwirkenden Drehteller im näheren Detail;
- Fig. 4: eine Draufsicht auf einen Bereich der Vorrichtung aus Fig. 1 aus Richtung VI.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen. Auch sei darauf hingewiesen, dass die Figuren übergreifend beschrieben sind.

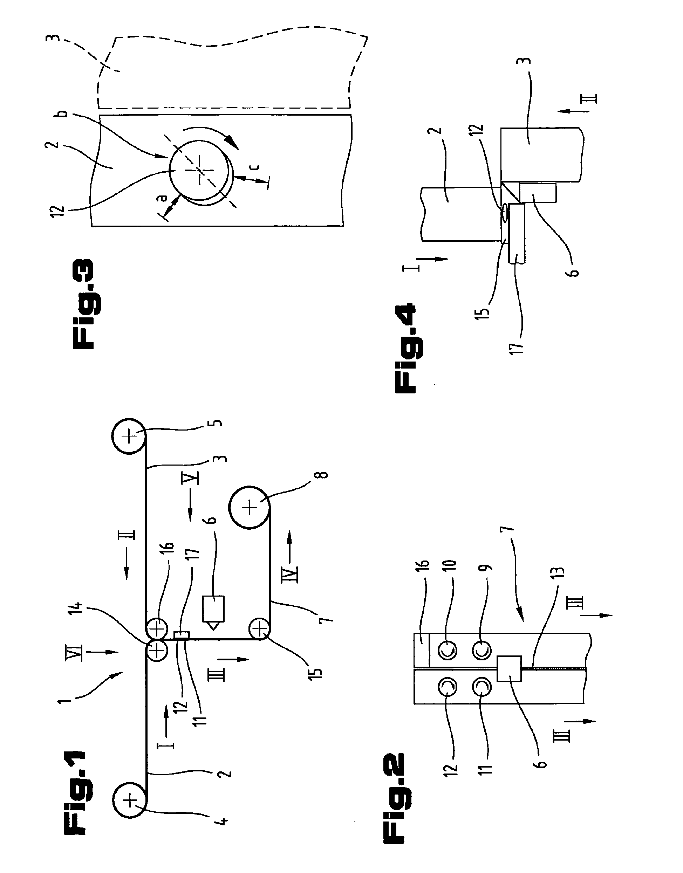

Gemäß Fig. 1 weist eine erfindungsgemäße Vorrichtung zur Verschweißung zweier einzelner Bänder 2, 3 ein Schweißgerät 6, welches bevorzugter Weise als Laserschweißgerät ausgebildet ist, auf. Auch wenn hier nur ein Schweißgerät 6 dargestellt ist, so können die Bänder 2 und 3 auch beidseitig geschweißt werden. In diesem Fall können zwei oder auch mehrere Schweißgeräte vorgesehen sein. Die Schweißgeräte können hierbei an gegenüberliegenden Breitseiten der Bänder 2 und 3 angeordnet sein und gegebenenfalls auch gleichzeitig die beiden Bänder 2 und 3 der miteinander verschweißen. Durch eine beidseitige Anordnung der Schweißgeräte lässt sich eine noch symmetrischere Schweißnaht erzielen. Die Bänder 2 und 3 können in der hier gezeigten Ausführungsform von auf Rollen 4 und 5 abgewickelt werden. Die Rollen 4 und 5 können je mittels eines Antriebsmittels, beispielswiese eines axial angeordneten Motors zum Bewegen der Bänder 2 und 3 in ihre Förderrichtungen I und II angetrieben sein. Darüber hinaus können die Bänder 2 und 3 auch in ihre Förderrichtungen I und II gezogen sein. Hierzu kann eine angetriebene Rolle 8 vorgesehen sein, auf welche ein aus den beiden Bändern 2 und 3 mittels des Schweißgerätes 6 zusammengeschweißtes Band 7 aufgewickelt wird.

Zum Umlenken der Bänder 2 und 3 in eine vertikale Richtung III weist die Vorrichtung 1 Umlenkvorrichtungen 14 und 16 auf. Die Umlenkvorrichtungen 14, 16 können beispielsweise als Umlenkrollen ausgeführt sein.

Entsprechend dem erfindungsgemäßen Verfahren zur Herstellung des Bandes 7 durch längsseitiges Verschweißen der einzelnen Bänder 2, 3 werden Abschnitte der einzelnen Bänder 2, 3 vor ihrem Verschweißen aus ihren, Förderrichtungen I und II in eine vertikale Richtung III umgelenkt. Die umgelenkten Abschnitte der Bänder 2, 3 werden in vertikaler Richtung III an einem Schweißkopf des Schweißgerätes 6 vorbeigeführt und von diesem miteinander verschweißt. In diesem Zusammenhang ist es erwähnenswert, dass die einander zugewandten Längskanten der beiden Bänder 2 und 3 so miteinander verschweißt werden, dass ein flächenbündiges Band 7 entsteht, welches durch eine Schweißnaht 13 zusammengehalten wird. Aufgrund der vertikalen Anordnung der Bänder 2 und 3 in dem Schweißbereich kann abgeschmolzenes Materialsymmetrisch erstarren. Die hieraus resultierende Schweißnaht 13 zeichnet sich durch eine sehr symmetrische Ausbildung aus.

Wie aus den Figuren 1 und 4 ersichtlich, werden die beiden Bänder 2 und 3 bevorzugter Weise vor ihrem Umlenken mittels der Umlenkvornchtungen 14 bzw. 16 aus einander entgegengesetzten Förderrichtungen I und II aufeinander zu bewegt. Nach dem Umlenken in die vertikale Richtung liegen die beiden Bänder 2 und 3 in einer gemeinsamen Ebene, wobei die Bewegungsrichtungen der beiden Bänder 2 und 3 nach dem Umlenken parallel zueinander verlaufen. Wie aus Fig. 4 weiters ersichtlich ist, sind die beiden Bänder 2 und 3 seitlich zueinander versetzt, sodass sie nach dem Umlenken unmittelbar nebeneinander angeordnet sind.

Nach dem Verschweißen der Bänder 2 und 3 zu dem Band 7 kann eine weitere Umlenkung 15, beispielsweise ebenfalls in Form einer Rolle vorgesehen sein, welche das Band 7 zu der Rolle 8 weiter führt.

Im Bereich der Schweißstelle kann die Vorrichtung 1 Drehteller aufweisen, die in der Figur 2 mit den Bezugszeichen 9, 10, 11, 12 versehen sind. In Fig. 1 sind hingegen nur die beiden Drehteller 11 und 12 ersichtlich. Die Drehteller 9, 10, 11, 12 können um ihre Drehachsen frei drehbar an einer Halterung 17 befestigt sein, die beispielsweise an einem hier nicht dargestellten Maschinenrahmen angeordnet sein kann. Bei der Darstellung in Fig. 2 ist die Halterung 17 nicht gezeigt, um die Funktionsweise der Drehteller besser darzustellen.

Abweichend von der in Fig. 2 dargestellten Variante der Erfindung können pro Band 2 und 3 auch zumindest zwei einander gegenüberliegende Drehteller vorgesehen sein. D.h., an jeder der beiden gegenüberliegenden Seiten des Bandes 2 bzw. 3 kann je zumindest ein Drehteller angeordnet sein, wobei diese Drehteller bevorzugter Weise einander genau gegenüberliegen.

Die einander zugewandten und miteinander zu verschweißenden Kanten der in vertikaler Richtung umgelenkten Abschnitte der Bänder 2, 3 werden mittels der Drehteller 9, 10, 11, 12 aufeinander zugetrieben. Die mit einem Band 2, 3 in Berührung stehenden Drehteller 9, 10, 11, 12 können hierbei in Richtung des anderen Bandes 2, 3 geneigt sein. D.h., dass die Drehachsen der Drehteller 9, 10,11,12 in Richtung des Spaltes zwischen den beiden Bändern 2 und 3 geneigt sind. Besonders vorteilhaft ist es, wenn jeder Drehteller 9, 10, 11, 12 nur in einem der zu verschweißenden Längskante benachbarten Bereich b an der Oberfläche des ihm zugeordneten Bandes 2, 3 anliegt, wie dies in Fig. 3 dargestellt ist. Gemäß der Darstellung in Fig. 3 ist der Drehteller 12 an seinen von der verschweißenden Längskante des Bandes 2 entfernteren Bereichen von der Bandoberfläche beabstandet. Diese Abstände sind in Fig. 3 mit den Bezugszeichen a und c bezeichnet.

Durch eine Abwärtsbewegung der beiden Bänder 2 und 3 werden die Drehteller 9, 10, 11 und 12 angetrieben. Durch die daraus resultierende Drehbewegung der Drehteller 9, 10,11 und 12 werden die beiden Bänder 2 und 3 aufeinander zu getrieben und ein Spalt zwischen den miteinander zu verschweißenden Längskanten der beiden Bändern 2 und 3 verringert, wodurch eine optimaler Abstand zwischen den Bändern 2 und 3 für den Schweißprozess erzielt werden kann.

Das längsverschweißte Band 7 kann weiteren nachfolgenden Fertigungsschritten, wie beispielsweise Schleifen und/oder Polieren unterworfen werden.

Die Ausführungsbeispiele zeigen mögliche Ausführungsvarianten des erfindungsgemäßen Verfahrens bzw. der erfindungsgemäße Vorrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus der erfindungsgemäßen Vorrichtung diese bzw. deren Bestandteile teilweise unmaßstäblich und/oder vergrößert und/oder verkleinert dargestellt wurden.

### Bezugszeichenaufstellung

- 1: Vorrichtung
- 2: Band
- 3: Band
- 4: Rolle
- 5: Rolle

- 6: Schweißgerät
- 7: Band
- 8: Rolle
- 9: Drehteller
- 10: Drehteller

- 11: Drehteller
- 12: Drehteller
- 13: Schweißnaht
- 14: Umlenkrolle
- 15: Umlenkrolle

- 16: Umlenkrolle
- 17: Halterung

## Patentansprüche

1. Verfahren zur Herstellung eines Bandes (7), welches durch längsseitiges Verschweißen zumindest zweier einzelner Bänder (2, 3) hergestellt wird, wobei Abschnitte der einzelnen Bänder vor dem Verschweißen in eine vertikale Richtung (III) umgelenkt werden, **dadurch gekennzeichnet, dass** die umgelenkten Abschnitte der Bänder (2, 3) in vertikaler Richtung (III) an einem Schweißkopf zumindest eines Schweißgerätes (6) vorbeigeführt und von diesem miteinander verschweißt werden.

2. Verfahren nach Anspruch 1, **dadurch gekennzeichnet, dass** die einander zugewandten und miteinander zu verschweißender Längskanten der in vertikaler Richtung umgelenkten Abschnitte der Bänder (2,3) mittels Drehteller (9,10,11,12) aufeinander zugetrieben werden, wobei jedem Band (2, 3) zumindest ein Drehteller (9, 10, 11, 12) zugeordnet ist, der in Richtung des anderen Bandes (2, 3) geneigt ist.

3. Verfahren nach Anspruch 2, **dadurch gekennzeichnet, dass** jeder Drehteller (9, 10,11,12) nur in einem der zu verschweißenden Längskante benachbarten Bereich an der Oberfläche des ihm zugeordneten Bandes (2, 3) anliegt

4. Verfahren nach einem der Ansprüche 1 bis 3, **dadurch gekennzeichnet, dass** die miteinander zu verschweißenden einzelnen Bänder vor dem Umlenken in vertikaler Richtung (III) aus einander entgegengesetzten Förderrichtungen (I, II) aufeinander zugeführt werden.

5. Vorrichtung (1) zur Herstellung eines aus zumindest zwei einzelnen Bändern (2, 3) längsverschweißten Bandes (7), wobei die Vorrichtung (1) ein Schweißgerät (6) und zumindest ein Antriebsmittel zum Bewegen der Bänder (2,3) aufweist, sowie zumindest eine Umlenkvorrichtung (14, 16), durch welche die einzelnen Bänder (2, 3) vor dem Passieren des Schweißkopfes des Schweißgerätes (6) in eine vertikale Richtung (III) umgelenkt werden, **dadurch gekennzeichnet, dass** die einzelnen Bänder (2, 3) in vertikaler Richtung (III) sowie in einer gemeinsamen Ebene verlaufend an dem Schweißkopf des Schweißgerätes (6) vorbeigeführt sind.

6. Vorrichtung nach Anspruch 5, **dadurch gekennzeichnet, dass** die Förderrichtungen der mit einander zu verschweißenden einzelnen Bänder vor dem Passieren der zumindest einen Umlenkung (14) einander entgegengesetzt sind.

7. Vorrichtung nach Anspruch 5 oder 6, **dadurch gekennzeichnet, dass** die Vorrichtung (1) zwischen der zumindest einen Umlenkung (14) und dem Schweißkopf des Schweißgerätes (6) zumindest zwei Drehteller (9,10,11,12) aufweist, welche zu den Oberflächen einzelnen Bänder (2, 3) in Richtung der miteinander zu verschweißenden Längskanten dieser Bänder (2, 3) geneigt angeordnet sind.

8. Vorrichtung nach Anspruch 7, **dadurch gekennzeichnet, dass** die Drehteller (9, 10,11,12) um ihre jeweiligen Drehachsen frei drehbar angeordnet sind.

9. Vorrichtung nach einem der Ansprüche 5 bis 8, **dadurch gekennzeichnet, dass** das Schweißgerät (6) ein Laserschweißgerät ist.

## Claims

1. A method for producing a strip (7) by butt-welding at least two individual strips (2, 3) along their longitudinal edges, wherein sections of the individual strips are prior to welding deflected in a vertical direction (III), **characterized in that** the deflected sections of the strips (2, 3) are guided in the vertical direction (III) past a welding head of at least one welding device (6) and butt-welded thereby.

2. The method according to claim 1, **characterized in that** the facing longitudinal edges of the vertically deflected sections of the strips (2, 3) to be butt-welded are driven toward one another by means of rotary discs (9, 10, 11, 12), wherein at least one rotary disc (9, 10, 11, 12) is assigned to each strip (2, 3) and inclined in the direction of the other strip (2, 3).

3. The method according to claim 2, **characterized in that** each rotary disc (9, 10, 11, 12) only contacts the surface of the strip (2, 3) assigned thereto in a region adjacent to the longitudinal edge to be butt-welded.

4. The method according to one of claims 1-3, **characterized in that** the individual strips to be butt-welded are prior to the deflection in the vertical direction (III) guided toward one another from opposite conveying directions (I, II).

5. A device (1) for producing a strip (7) consisting of at least two individual longitudinally butt-welded strips (2, 3), wherein the device (1) features a welding device (6) and at least one driving means for moving the strips (2, 3), as well as at least one deflection device (14, 16), by means of which the individual strips (2, 3) are deflected in a vertical direction (III) prior to passing the welding head of the welding device (6), **characterized in that** the individual strips (2, 3) are guided past the welding head of the welding device (6) in the vertical direction (III), as well as in a common plane.

6. The device according to claim 5, **characterized in that** the conveying directions of the individual strips to be butt-welded are directed opposite to one another prior to passing the at least one deflection (14).

7. The device according to claim 5 or 6, **characterized in that** the device (1) features at least two rotary discs (9, 10, 11, 12) between the at least one deflection (14) and the welding head of the welding device (6), wherein said rotary discs are arranged such that they are inclined relative to the surfaces of the individual strips (2, 3) in the direction of the longitudinal edges of these strips (2, 3) to be butt-welded.

8. The device according to claim 7, **characterized in that** the rotary discs (9, 10, 11, 12) are arranged such that they are freely rotatable about their respective axes of rotation.

9. The device according to one of claims 5-8, **characterized in that** the welding device (6) is a laser welding device.

## Revendications

1. Procédé pour réaliser une bande (7) qui est fabriquée par soudage d'au moins deux bandes individuelles (2, 3) le long de leur bords longitudinaux, des tronçons des bandes individuelles étant déviés, avant le soudage, dans une direction verticale (III), **caractérisé en ce que** les tronçons déviés des bandes (2, 3) étant conduits dans la direction verticale (III) devant la tête de soudure d'au moins un appareil de soudage (6) et étant soudés par ce dernier les uns aux autres.

2. Procédé selon la revendication 1, **caractérisé en ce que** les bords longitudinaux en regard et destinés à être soudés l'un à l'autre, des tronçons des bandes (2, 3) déviés en direction verticale sont rapprochés l'un à l'autre à l'aide de plaques tournantes (9, 10, 11, 12), à chaque bande (2, 3) étant associée au moins une plaque tournante (9, 10, 11, 12) inclinée vers l'autre bande (2, 3).

3. Procédé selon la revendication 2, **caractérisé en ce que** chaque plaque tournante (9, 10, 11, 12) est en contact avec la surface de la bande associée (2, 3) uniquement dans une zone avoisinante au bord longitudinal à souder.

4. Procédé selon l'une des revendications 1 à 3, **caractérisé en ce que** les bandes individuelles à souder les unes aux autres sont amenées les unes vers les autres, avant d'être déviées dans la direction verticale (III), de directions d'amenée (I, II) opposées l'une à l'autre.

5. Dispositif (1) pour fabriquer une bande (7) à partir d'au moins deux bandes individuelles (2, 3) soudées longitudinalement l'une à l'autre, le dispositif comprenant un appareil de soudage (6) et au moins un moyen d'entraînement pour déplacer les bandes (2, 3) et au moins un moyen de déviation (14, 16) par lequel les bandes individuelles (2, 3) sont déviées, avant le passage devant la tête de soudage de l'appareil de soudage (6), dans une direction verticale (III), **caractérisé en ce que** les bandes individuelles (2, 3) sont passées devant la tête de soudage de l'appareil de soudage (6) dans la direction verticale (III) et dans un plan commun.

6. Dispositif selon la revendication 5, **caractérisé en ce que** les directions d'amenée des bandes individuelles à souder les unes aux autres, sont opposées l'une à l'autre avant le passage devant le ou les moyens de déviation (14).

7. Dispositif selon la revendication 5 ou 6, **caractérisé en ce que** le dispositif (1) comprend, entre le moyen de déviation (14) et la tête de soudage de l'appareil de soudage (6), au moins deux plaques tournantes (9, 10, 11, 12) qui sont inclinées vers les surfaces des bandes individuelles (2, 3) en direction des bords longitudinaux de ces bandes (2, 3) à souder les uns aux autres.

8. Dispositif selon la revendication 7, **caractérisé en ce que** les plaques tournantes (9, 10, 11, 12) sont disposées tournant librement autour de leur axe de rotation respectif.

9. Dispositif selon l'une des revendications 5 à 8, **caractérisé en ce que** l'appareil de soudage (6) est un appareil de soudage au laser.
